(19) Europäisches Patentamt
European Patent Office
Office européen des brevets

(11) Veröffentlichungsnummer: **0 018 620**
**A1**

(12) # EUROPÄISCHE PATENTANMELDUNG

(21) Anmeldenummer: **80102287.2**

(22) Anmeldetag: **28.04.80**

(51) Int. Cl.³: **C 08 L 21/00**
C 08 K 5/44

(30) Priorität: **08.05.79 DE 2918469**

(43) Veröffentlichungstag der Anmeldung:
**12.11.80 Patentblatt 80/23**

(84) Benannte Vertragsstaaten:
**AT BE DE FR GB IT NL**

(71) Anmelder: **BAYER AG**
**ZENTRALBEREICH PATENTE, MARKEN UND LIZENZEN**
**D-5090 LEVERKUSEN 1, BAYERWERK(DE)**

(72) Erfinder: **Schubart, Rüdiger, Dr.**
**An der Engelsfuhr 27**
**D-5070 Bergisch-Gladbach(DE)**

(72) Erfinder: **Eholzer, Ulrich, Dr.**
**Gerstenkamp 10**
**D-5000 Köln 80(DE)**

(72) Erfinder: **Kempermann, Theo, Dr.**
**Friedrich-Schmidt-Strasse 16a**
**D-5000 Köln 41(DE)**

(72) Erfinder: **Roos, Ernst, Dr.**
**Am Geus Garten 6**
**D-5068 Odenthal(DE)**

(54) **Vulkanisationssystem, dieses enthaltende Kautschukmischung, sowie ein Verfahren zur Vulkanisation.**

(57) Eine Mischung aus Schwefel oder einem Schwefelspender, einem Mercapto- bzw. Sulfenamidbeschleuniger, einer Verbindung, die einen Thiophenylrest enthält und einen üblichen Zusatzbeschleuniger wird als Vulkanisationssystem für Natur- oder Synthesekautschuk benutzt.

EP 0 018 620 A1

Croydon Printing Company Ltd.

BAYER AKTIENGESELLSCHAFT
Zentralbereich
Patente, Marken und Lizenzen

5090 Leverkusen, Bayerwerk
E/W

Vulkanisationssystem, dieses enthaltende Kautschukmischung, sowie ein Verfahren zur Vulkanisation

Die Erfindung betrifft ein Vulkanisationssystem bestehend aus Schwefel, einem Schwefelspender, einem Mercapto- bzw. Sulfenamidbeschleuniger, einer Verbindung, die einen Thiophenylrest enthält und einen üblichen Zusatzbeschleuniger, eine vulkanisierbare Kautschukmischung bestehend aus Natur- und/oder Synthesekautschuk, dem obigen Vulkanisationssystem sowie üblichen Zusätzen, sowie ein Verfahren zu ihrer Vulkanisation.

Mit Hilfe der erfindungsgemäßen Vulkanisationssysteme lassen sich Kautschuke vulkanisieren, die nach erfolgter Vulkanisation eine verbesserte Reversionsbeständigkeit besitzen.



BAD ORIGINAL

Unter Reversion versteht man ein Wiederabfallen des Vernetzungsgrades und mechanischer Werte von Vulkanisaten (wie Zugfestigkeit, Weiterreißfestigkeit, Elastizität) bei einer Fortführung der Vulkanisation über das Optimum hinaus. Reversion tritt auf bei der Vulkanisation von Dien-Kautschuken, insbesondere Naturkautschuk und synthetischem Polyisopren bei hohen Vulkanisationstemperaturen bzw. langen Vulkanisationszeiten, wie sie bei der Herstellung voluminöser Artikel (z.B. LKW-Reifen) erforderlich sind. Die Anwendung wirtschaftlich wünschenswerter hoher Vulkanisationstemperaturen wird durch das Auftreten der Reversion begrenzt.

Eine Verbesserung der Reversionsbeständigkeit war bisher nur in sehr begrenztem Umfang möglich.

Es ist bekannt, daß die Reversionsbeständigkeit von Vulkanisationssystemen verbessert werden kann durch Verwendung verringerter Schwefel-Dosierungen. Während bei der "Normal-Schwefel-Vulkanisation" Schwefel-Mengen von ca. 1,8 - 2,5 phr (Gew.-Teile bezogen auf 100 Gew.-Teile Kautschuk) verwendet werden, arbeiten "Semi-Efficient-Systeme" mit mittleren Schwefel-Mengen von ca. 1 - 1,8 phr und "Efficient-Systeme" mit Schwefel-Dosierungen von unter 1 phr. Im Vergleich zur Normal-Schwefel-Vulkanisation treten mit verringerten Schwefel-Mengen jedoch Nachteile auf hinsichtlich Rißbeständigkeit, Weiterreißfestigkeit, Abriebbeständigkeit und Cordhaftung der Vulkanisate, was die Anwendung der Vulkanisation mit

niederen bzw. mittleren Schwefel-Mengen begrenzt. Es ist zum Beispiel bei der Reifen-Herstellung nicht möglich, die Schwefel-Dosierung unter den Bereich mittlerer Dosierungen (ca. 1,5) zu senken.

Es ist weiter bekannt, daß die Art der verwendeten Vulkanisationsbeschleuniger einen Einfluß auf die Reversionsbeständigkeit der Kautschuk-Mischungen hat. Während Ultra-Beschleuniger, wie Dithiocarbamate, Thiurame, sowie basische Beschleuniger wie Diphenylguanidin, niedrige Reversionsbeständigkeit ergeben, verhalten sich Mercapto-Beschleuniger wie Mercaptobenzthiazol, Dibenzothiazyldisulfid und das Zinksalz des Mercaptobenzthiazols bzw. Sulfenamid-Beschleuniger wie Benzothiazyl-2-cyclohexylsulfenamid, Benzothiazyl-2-tert.-butylsulfenamid, Benzothiazyl-2-morpholin-sulfenamid und Benzothiazyl-dicyclohexylsulfenamid günstiger hinsichtlich Reversionsbeständigkeit.

Es ist daher Stand der Technik, Vulkanisationssysteme für Dien-Kautschuke mit verbesserter Reversionsbeständigkeit wie folgt aufzubauen:

a) mittlere Schwefel-Mengen (ca. 1,4 - 1,6 phr),
b) Mercapto- bzw. Sulfenamid-Beschleuniger (ca. 1 - 2 phr).

Jedoch ergeben auch derartige Vulkanisationssysteme bei hohen Vulkanisationstemperaturen (z.B. über 170°C) bzw. langer Heizdauer Reversion.

Es ist ferner bekannt, daß der Zusatz von Vulkanisationsbeschleuniger des Dithiophosphats-Typs, wie Zink-dibutyl-dithiophosphat zu den oben beschriebenen Vulkanisationssystemen die Reversionsbeständigkeit verbessert (H. Ehrend, Gummi, Asbest, Kunststoffe 3c (1977) S. 68-71). Diese Beschleuniger verbessern zwar die Reversion, verkürzen aber die Anvulkanisationszeit in unerwünschter Weise. Dies stellt einen Nachteil dar, weil eine ausreichende Verarbeitungssicherheit insbesondere bei den Anwendungsgebieten erforderlich ist, bei denen eine Verbesserung der Reversionsbeständigkeit von besonderem Interesse ist, z.B. bei der Herstellung von LKW-Reifen und allgemein bei der Herstellung voluminöser Artikel.

Aufgabe der Erfindung war es somit, ein Vulkanisationssystem bereitzustellen, das die Reversionsbeständigkeit der Kautschukvulkanisate erhöht und gleichzeitig die Anvulkanisationszeit bei deren Vulkanisation nicht verkürzt.

Gegenstand der Erfindung ist somit ein Vulkanisationssystem bestehend aus

a) 20 bis 50 Gew.-Teilen, bevorzugt 40 bis 50 Gew.-Teilen Schwefel oder 20 bis 50 Gew.-Teilen, bevorzugt 40 bis 50 Gew.-Teilen eines Schwefelspenders

b) 20 bis 50 Gew.-Teilen, bevorzugt 20 bis 30 Gew.-Teilen eines Beschleunigers der Mercapto- bzw. Sulfenamidgruppe

c) 0 bis 10 Gew.-Teilen, bevorzugt 0 bis 5 Gew.-Teilen eines konventionellen Zusatzbeschleunigers und

d) 20 bis 50 Gew.-Teilen, bevorzugt 20 bis 30 Gew.-Teilen einer Verbindung der allgemeinen Formel 1

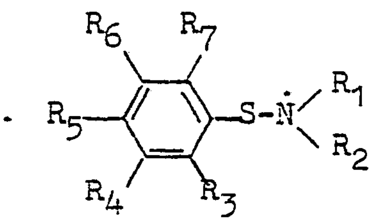

(1)

in der

$R_1$ Wasserstoff, einen $C_1$-$C_{10}$-Alkyl- oder Alkenylrest, einen $C_5$-$C_7$-Cycloalkyl- oder Cycloalkenylrest, eine $C_6$-$C_{10}$-Arylgruppe, die gegebenenfalls mit $C_1$-$C_4$-Alkylresten ein- oder mehrfach, bevorzugt 1 - 2-fach substituiert ist,

$R_2$ Wasserstoff, einen $C_1$-$C_{10}$-Alkyl- oder Alkenylrest, einen $C_5$-$C_7$-Cycloalkyl- oder Cycloalkenylrest, eine $C_6$-$C_{10}$-Arylgruppe, die gegebenenfalls mit $C_1$-$C_4$-Alkylresten ein- oder mehrfach, bevorzugt 1 - 2-fach substituiert ist, einen Rest der allgemeinen Formeln 2 oder 3

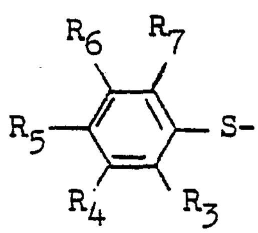

(2)

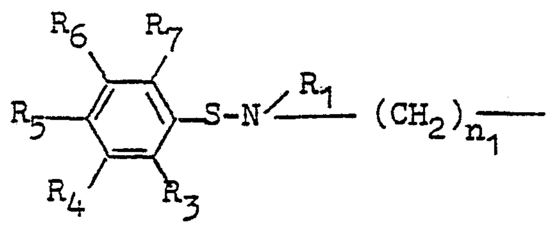 (3),

in welcher

$n_1$ Zahlen von 2 bis 10, bevorzugt 2 bis 6 darstellen,

$R_1$ und $R_2$ gemeinsam einen 4- bis 10-gliedrigen, bevorzugt 2 bis 7 gliedrigen carbocyclischen Ring bilden, der gegebenenfalls ein Heteroatom wie N, O, S im Ring enthält,

$R_3$ bis $R_7$ gleich oder verschieden Wasserstoff, Halogen, Nitro, Cyano, $-CF_3$, $-C\ Cl_3$, einen Alkoxycarbonylrest mit $C_1$-$C_4$-Alkyl im Alkoxyrest, einen $C_1$-$C_4$-Alkylrest, wobei jedoch nicht alle Reste $R_3$-$R_7$ gleichzeitig Wasserstoff darstellen,

eine Verbindung der allgemeinen Formel 4

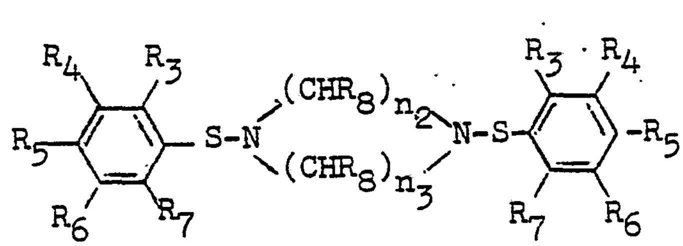 (4),

in welcher

$n_2$ und $n_3$ gleich oder verschieden Zahlen von 2 bis 10, bevorzugt 2 bis 3 darstellen und

$R_8$ Wasserstoff oder Methyl bedeuten;

oder eine Verbindung der Formel (5)

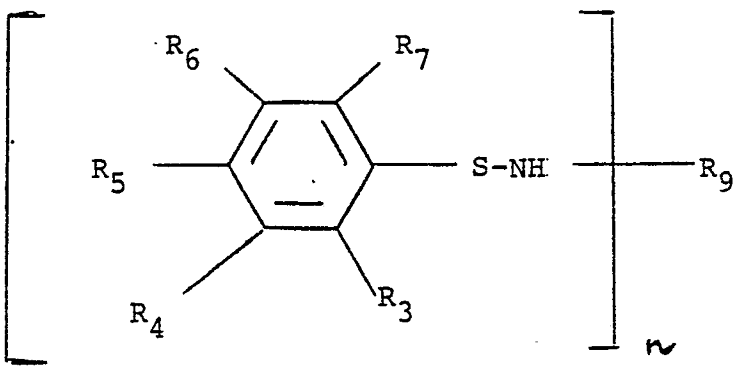

(5)

in der

n die Zahlen 2 oder 3 und

$R_9$ $C_4$-$C_{12}$ Cycloalkyl, $C_6$-$C_{10}$ Aryl, Di-$C_4$-$C_{12}$ Cycloalkyl-$C_1$-$C_4$-alkyl, Tri-$C_4$-$C_{12}$-cycloalkyl-$C_1$-$C_4$ alkyl, Di-$C_6$-$C_{10}$-aryl-$C_1$-$C_4$-alkyl und Tri-$C_6$-$C_{10}$ aryl-$C_1$-$C_4$ alkyl

bedeuten,

wobei die Summe der Komponenten a) - d) 100 beträgt.

Ein weiterer Gegenstand der Erfindung ist eine vulkanisierbare Mischung bestehend aus natürlichem und/oder synthetischem Kautschuk aus halogenfreien Dienen, obigem Vulkanisationssystem und gegebenenfalls weiteren üblichen Zusätzen.

Ein weiterer Gegenstand der Erfindung ist ein Verfahren zur Vulkanisation von Natur- und/oder Synthesekautschuk aus halogenfreien Dienen in Gegenwart von Schwefel und/oder Schwefelspendern,Vulkanisationsbeschleunigern und gegebenenfalls üblichen Zusätzen, das dadurch gekennzeichnet ist, daß man

a) 0,1 - 5 phr, vorzugsweise 1 - 2 phr Schwefel bzw. 0,2 - 10 phr, vorzugsweise 2 - 4 phr eines Schwefelspenders ,

b) 0,1 - 5 phr, bevorzugt 0,4 - 2 phr eines Beschleunigers der Mercapto- bzw. Sulfenamidgruppe ,

c) 0 - 5 phr, bevorzugt 0 - 1 phr eines konventionellen Zusatzbeschleunigers und

d) 0,1 - 5 phr, bevorzugt 0,4 - 2,5 phr einer Verbindung der allgemeinen Formeln 1 oder 4

getrennt oder gleichzeitig dem Kautschuk zugibt und anschließend in üblicher Weise vulkanisiert.

Als Schwefelspender der Gruppe a) werden Verbindungen angesehen, die unter Vulkanisationsbedingungen Schwefel abspalten. Dies sind u.a. Dimorpholyldisulfid (DTDM), Tetramethylthiuramdisulfid (TMTD) oder 2-(4-Morpholinyl-dithio)-benzothiazol.

Als Beschleuniger der Mercaptogruppe in b) seien beispielhaft genannt: 2-Mercaptobenzthiazol (MBT), Dibenzothiazyl-disulfid (MBTS) oder das Zinksalz des 2-Mercaptobenzthiazols (ZMBT).

Als Beschleuniger der Sulfenamidgruppe in b) seien beispielhaft genannt: Benzothiazyl-2-cyclohexylsulfenamid (CBS), Benzothiazyl-2-tert.-butylsulfenamid (TBBS), Benzothiazoyl-2-morpholinsulfenamid (MBS), Benzothiazyl-dicyclohexylsulfenamid (DCBS), 2-(4-Morpholinyl-dithio)-benzothiazol oder Morpholinyl-thiocarbonyl-sulfenmorpholid.

Bevorzugt werden MBT, MBTS, CBS, TBBS und MBS.

Als konventionelle Zusatzbeschleuniger in c) seien beispielhaft genannt: Tetramethylthiuramdisulfid (TMTD), Tetramethylthiurammonosulfid (TMTM), Zink-N-dimethyldithiocarbamat (ZDMC), Zink-N-diethyl-dithiocarbamat (ZDEC), Zink-N-dibutyldithio-carbamat (ZDBC), Zink-N-ethylphenyldithiocarbamat (ZEPC) oder Zink-N-methylen-dithiocarbamat (Z5MC).

Die Substituenten der Verbindungen in d) können im einzelnen folgendes darstellen:

Als Alkyl in $R_1$ und $R_2$ werden Reste wie Methyl, Ethyl, n-Propyl, iso-Propyl, Allyl, Propenyl, n-Butyl, sec-Butyl, tert.-Butyl, n-Pentyl, sec-Pentyl, tert.-Pentyl, n-Hexyl, sec-Hexyl, tert.-Hexyl, Heptyl, Octyl, 2-Ethylhexyl, Nonyl und Decyl eingesetzt. Cycloalkyl kann sein Cyclopentyl, Cyclopentenyl, Cyclohexyl, Cyclohexenyl, Cycloheptyl, Cycloheptenyl, Cycloheptadienyl und Cycloheptatrienyl. Aryl kann Phenyl, Naphthyl, Anthracenyl sowie mit einem bis 5-Alkylresten - oben genannter Art - substituiertes Phenyl sein. Beispielsweise sei 2-Tolyl, 3-Tolyl, 4-Tolyl, die verschiedenen Isomeren des o-, m-, p-Xylyls, Mesitilyl, Cumyl, Duryl, tert.-Butylphenyl, Isopropylphenyl genannt.

Der Methylenrest $-(CH_2)_{n1}-$ im Substituent $R_2$ in der Formel 3 bedeutet Methylen, Ethylen, Propylen, Butylen, Pentylen, Hexylen, Heptylen, Octylen, Nonylen oder Decylen.

Die gleiche Bedeutung besitzen die Reste $-(CHR_8)_{n2}-$ und $-(CHR_8)_{n3}-$ in Formel 4. Darüberhinaus können sie zusammen mit den beiden N-Atomen darstellen: Piperazin, 2,6-Dimethylpiperazin oder 2,5-Dimethylpiperazin.

$R_1$ und $R_2$ können außerdem einen 4-10-gliedrigen Ring bilden, der gegebenenfalls noch 1 Heteroatom wie N, O oder S enthält. Beispielhaft sei hier der Morpholinylrest, N-Methylpiperazinylrest und Thiamorpholinylrest erwähnt. Außerdem können aber auch Pyrrolidin, Piperidin,

Perhydroazepin, Azacyclooctan, Azacyclononan, Azacyclodecan, Perhydrooxazol, Perhydrothiazol, N-Methylperhydroimidazol, eingesetzt werden. Diese Ringsysteme können aber auch Teile eines größeren Ringsystems sein wie z.B. im 1,2,3,4-Tetrahydrochinolin, Indol, 2-Methylindol, 2,3-Dimethylindol, Perhydroindol, Carbazol und Perhydrocarbazol, wie auch 7-Azanorbornan und 7-Azanorbornen.

$R_3$ bis $R_7$ können gleich und verschieden sein. Sie können H, Halogen wie Chlor, Brom, Fluor, $NO_2$, CN, Alkyl mit $C_1$-$C_4$ oben genannter Art, $CF_3$, $CCl_3$ und Alkoxycarbonyl mit $C_1$-$C_4$ als Alkoholrest darstellen, wobei nicht alle Reste $R_3$-$R_7$ H sein dürfen. Im allgemeinen wird jedoch $R_3$-$R_7$ Chlor sein.

Als Verbindungen seien beispielhaft genannt:

N-Amino-thiopentachlorbenzol
N-Dimethylamino-thiopentachlorbenzol
N-Diethylamino-thiopentachlorbenzol
N-Di-n-propylamino-thiopentachlorbenzol
N-Di-iso-propylamino-thiopentachlorbenzol
N-Di-n-butylamino-thiopentachlorbenzol
N-Di-sec-butylamino-thiopentachlorbenzol
N-Di-tert-butylamino-thiopentachlorbenzol
N-Di-n-pentylamino-thiopentachlorbenzol
N-Di-sec-pentylamino-thiopentachlorbenzol
N-Di-tert-pentylamino-thiopentachlorbenzol
N-Di-n-hexylamino-thiopentachlorbenzol
N-Di-heptylamino-thiopentachlorbenzol

N-Aziridino-thiopentachlorbenzol
N-Di-octylamino-thiopentachlorbenzol
N-Di-2-ethylhexylamino-thiopentachlorbenzol
N-Di-nonylamino-thiopentachlorbenzol
N-Di-decylamino-thiopentachlorbenzol
N-Methylamino-thiopentachlorbenzol
N-Ethylamino-thiopentachlorbenzol
N-Propylamino-thiopentachlorbenzol
N-Isopropylamino-thiopentachlorbenzol
N-Butylamino-thiopentachlorbenzol
N-sec-Butylamino-thiopentachlorbenzol
N-tert-Butylamino-thiopentachlorbenzol
N-Pentylamino-thiopentachlorbenzol
N-Heptylamino-thiopentachlorbenzol
N-Octylamino-thiopentachlorbenzol
N-Nonylamino-thiopentachlorbenzol
N-Decylamino-thiopentachlorbenzol
N-2-Ethylhexylamino-thiopentachlorbenzol
N-Phenylamino-thiopentachlorbenzol
N-2-Methylphenylamino-thiopentachlorbenzol
N-3-Methylphenylamino-thiopentachlorbenzol
N-4-Methylphenylamino-thiopentachlorbenzol
N-Dimethylphenylamino-thiopentachlorbenzol
N-Diethylphenylamino-thiopentachlorbenzol
N-Diisopropylenphenylamino-thiopentachlorbenzol
N,N-Ethylimino-bis(thiopentachlorbenzol)
N,N-Propylimino-bis(thiopentachlorbenzol)
N,N-Isopropylimino-bis(thiopentachlorbenzol)
N,N-Amino-bis(thiopentachlorbenzol)

N,N-Butylimino-bis(thiopentachlorbenzol)
N,N-sec-Butylimino-bis(thiopentachlorbenzol)
N,N-tert-Butylimino-bis(thiopentachlorbenzol)
N,N-Pentylimino-bis(thiopentachlorbenzol)
N,N-Hexylimino-bis(thiopentachlorbenzol)
N,N-Heptylimino-bis(thiopentachlorbenzol)
N,N-tert-Heptylimino-bis(thiopentachlorbenzol)
N,N-Octylimino-bis(thiopentachlorbenzol)
N,N-Nonylimino-bis(thiopentachlorbenzol)
N,N-Decylimino-bis(thiopentachlorbenzol)
N,N-Phenylimino-bis(thiopentachlorbenzol)
N,N-Cyclohexylimino-bis(thiopentachlorbenzol)
N-Cyclohexylamino-thiopentachlorbenzol
N-Methylcyclohexylamino-thiopentachlorbenzol)
N-Trimethylcyclohexylamino-thiopentachlorbenzol
N-Dimethylcyclohexylamino-thiopentachlorbenzol
N,N-Trimethylcyclohexylamino-bis(thiopentachlorbenzol)
N,N'-Ethylendiamino-bis(thiopentachlorbenzol)
N,N'-Propylendiamino-bis(thiopentachlorbenzol)
N,N'-Butylendiamino-bis(thiopentachlorbenzol)
N,N'-Pentylendiamino-bis(thiopentachlorbenzol)
N,N'-Hexylendiamino-bis(thiopentachlorbenzol)
N,N'-Heptylendiamino-bis(thiopentachlorbenzol)
N,N'-Octylendiamino-bis(thiopentachlorbenzol)
N,N'-Nonylendiamino-bis(thiopentachlorbenzol)
N,N'-Decylendiamino-bis(thiopentachlorbenzol)
N,N'-1,2-Phenylendiamino-bis(thiopentachlorbenzol)
N,N'-1,3-Phenylendiamino-bis(thiopentachlorbenzol)
N,N'-1,4-Phenylendiamino-bis(thiopentachlorbenzol)

N,N'(Bis-1,4-aminomethylbenzol)-bis-(thiopentachlorbenzol)
N-Benzylamino-thiopentachlorbenzol
N-Benzylamino-bis(thiopentachlorbenzol)
N-Methylbenzylamino(thiopentachlorbenzol)
N,N-Phenylen-1,4-diamino-bis(thiopentachlorbenzol)
N,N'-Cyclohexylen-1,4- bzw. 1,2-diamino-bis(thiopentachlorbenzol)
N,N'-(1-Amino-3-aminomethyl-3,5,5-trimethylcyclohexan)-bis(thiopentachlorbenzol)
N,N'-(4,4'-Diamino-dicyclohexylmethan)-bis(thiopentachlorbenzol)
N,N'-(4,4'-Diamino-3,3'-dimethyl-dicyclohexylmethan)-bis(thiopentachlorbenzol)
N,N'-Piperazino-bis(thiopentachlorbenzol)
N,N'-Hexylendiamino-bis(thiopentachlorbenzol)
N-Pyrrolidino-thiopentachlorbenzol
N-Piperidino-thiopentachlorbenzol
N-Perhydroazepino-thiopentachlorbenzol
N-Morpholino-thiopentachlorbenzol
N-Hydroxy-ethyl-methylamino-thiopentachlorbenzol
N-Dihydroxy-ethylamino-thiopentachlorbenzol
N-Hydroxyethylamino-thiopentachlorbenzol
N-Glycin-thiopentachlorbenzol
N-Cyanethylamino-thiopentachlorbenzol
N-(4-Amino-2,2,6,6-tetramethylpiperidino)-thiopentachlorbenzol
N-Dicyclohexylamino-thiopentachlorbenzol
N-Diphenylaminothiopentachlorbenzol
Bevorzugt werden folgende Verbindungen genannt:

N-Dimethylamino-thiopentachlorbenzol
N-Diisopropylamino-thiopentachlorbenzol
N-Di-tert-butylamino-thiopentachlorbenzol

N-Dimethylamino-(thio-2-nitrobenzol)
N-Dimethylamino-thio-(2-carboxymethylbenzol)
N-Dimethylaminothi-(2-carboxybenzol)
N-Dimethylamino-(thio-4-methylbenzol)
N-Dimethylamino-thio-(4-chlorbenzol)
N-Dimethylamino-thio-(2-cyanobenzol
N-Dimethylamino-thio-(2-trifluormethylbenzol)
N-Methylamino-thiopentachlorbenzol
N-tert.-Butylamino-thiopentachlorbenzol
N-Pentylamino-thiopentachlorbenzol
N,N-Cyclohexylimino-bis(thiopentachlorbenzol)
N-Cyclohexylamino-thiopentachlorbenzol
N,N'-Ethylendiamino-bis(thiopentachlorbenzol)
N,N'-Piperadin-bis(thiopentachlorbenzol)
N'-Morpholino-thiopentachlorbenzol
N,N'-Methylamino-bis-(thiopentachlorbenzol).

$R_9$ in Formel 5 kann folgende Reste bedeuten, wenn n die Zahl 2 annimmt:

o,m,p-Phenylen, perhydriertes o,m,p-Phenylen, o,m,p-Dimethylen-benzol, 1,2-Dimethylen-cyclohexan, 1,3,-Di-Methylen-cyclohexan, 1,4-Dimethylen-cyclohexan, 1,2-substituiertes Naphthalin, 1,4-substituiertes Naphthalin, 1,5-substituiertes Naphthalin, 1,8-substituiertes Naphthalin, die genannten Naphthalin-Derivate in der Tetrahydro- und Perhydro-Form, 2,4-substituiertes Toluol, 2,3-substituiertes Toluol, 3,4-substituiertes Toluol, 2,5-substituiertes Toluol, 2,6-substituiertes Toluol, sowie die genannten substituierten Toluole in perhydrierter Form, Isophoron-Diradikal, 4,4'-substituiertes Diphenylmethan, 4,4'-substituiertes Diphenylethan, 4,4'-substituiertes Diphenylpropan sowie die entsprechenden teilweise bzw. völlig hydrierten Diphenylpropanethan- und -methan-Formen;

R kann außerdem ein Cycloalkyl-Rest mit $C_4$-$C_{12}$ sein, z.B. substituiertes Cyclobutan, Cyclopentan, Cycloheptan, Cyclooctan, Cyclononan, Cyclodecan, Cycloundecan, Cyclododecan. Diese Reste können zusätzlich niederes Alkyl von $C_1$-$C_4$, wie Methyl, Ethyl, Propyl, Isopropyl sowie Butyl als Substituenten aufweisen.

Im Falle n = 3 steht $R_9$ beispielsweise für folgende Reste:

Tri-cycloalkyl-alkan, Triphenyl-alkan wie z.B. 4,4',4"-Tricyclohexylmethan, 4,4',4"-Tri-(2-methylcyclohexyl)-methan, 4,4',4"-Triphenylmethan, 4,4',4"-Tri(2-methylphenyl)-methan.

Beispielhaft seien folgende Verbindungen genannt:

N,N'-Phenylen-1,2-di(amino-thiopentachlorbenzol)
N,N'-Phenylen-1,3-di(amino-thiopentachlorbenzol)
N,N'-Phenylen-1,4-di(amino-thiopentachlorbenzol)
N,N'-Cyclohexylen-1,2-di(amino-thiopentachlorbenzol)
N,N'-Cyclohexylen-1,3-di(amino-thiopentachlorbenzol)
N,N'-Cyclohexylen-1,4-di(amino-thiopentachlorbenzol)
N,N'-Xylylen-1,2-di(amino-thiopentachlorbenzol)
N,N'-Xylylen-1,3-di(amino-thiopentachlorbenzol)
N,N'-Xylylen-1,4-di(amino-thiopentachlorbenzol)
N,N'-Naphthylen-1,2-di(amino-thiopentachlorbenzol)
N,N'-Naphthylen-1,4-di(amino-thiopentachlorbenzol)
N,N'-Naphthylen-1,5-di(amino-thiopentachlorbenzol)
N,N'-Naphthylen-1,8-di(amino-thiopentachlorbenzol)
N,N'-1,2,3,4-Tetrahydronaphthylen-1,4-di(amino-thiopentachlorbenzol)
N,N'-1,2,3,4-Tetrahydronaphthylen-1,5-di(amino-thiopentachlorbenzol)
N,N'-1,2,3,4-Tetrahydronaphthylen-1,8-di(amino-thiopentachlorbenzol)
N,N'-Perhydronaphthylen-1,2-di(amino-thiopentachlorbenzol)
N,N'-Perhydronaphthylen-1,3-di(amino-thiopentachlorbenzol)
N,N'-Perhydronaphthylen-1,4-di(amino-thiopentachlorbenzol)
N,N'-Perhydronaphthylen-1,5-di(amino-thiopentachlorbenzol)
N,N'-Perhydronaphthylen-1,8-di(amino-thiopentachlorbenzol)

N,N'-Toluylen-2,3-di(amino-thiopentachlorbenzol)
N,N'-Toluylen-2,4-di(amino-thiopentachlorbenzol)
N,N'-Toluylen-2,5-di(amino-thiopentachlorbenzol)
N,N'-Toluylen-2,6-di(amino-thiopentachlorbenzol)
N,N'-Toluylen-3,4-di(amino-thiopentachlorbenzol)
N,N'-Perhydrotoluylen-2,3-di(amino-thiopentachlorbenzol)
N,N'-Perhydrotoluylen-2,4-di(amino-thiopentachlorbenzol)
N,N'-Perhydrotoluylen-2,5-di(amino-thiopentachlorbenzol)
N,N'-Perhydrotoluylen-2,6-di(amino-thiopentachlorbenzol)
N,N'-Perhydrotoluylen-3,4-di(amino-thiopentachlorbenzol)
N,N'- Diphenyl-4,4'-di(amino-thiopentachlorbenzol) -methan
N,N'-2,2- Diphenyl-4,4'-di(amino-thiopentachlorbenzol) -propan
N,N',N"- Triphenyl-4,4',4"-tri(amino-thiopentachlorbenzol) -methan
N,N',N"- Tri(-2methylphenyl)-4,4',4"-tri(amino-thiopentachlorbenzol) -methan
N,N',N"- Tri-cyclohexyl-4,4',4"-tri(amino-thiopentachlorbenzol) -methan
N,N'-Cyclobutylen-1,3-di(amino-thiopentachlorbenzol
N,N'-Cyclopentylen-1,2-di(amino-thiopentachlorbenzol)
N,N'-Cycloheptylen-1,4-di(amino-thiopentachlorbenzol)
N,N'-Cyclopentylen-1,3-di(amino-thiopentachlorbenzol)
N,N'-Cycloheptylen-1,3-di(amino-thiopentachlorbenzol)
N,N'-Cyclooctylen-1,2-di(amino-thiopentachlorbenzol)
N,N'-Cyclooctylen-1,3-di(amino-thiopentachlorbenzol)
N,N'-Cyclooctylen-1,4-di(amino-thiopentachlorbenzol)
N,N'-Cyclononylen-1,3-di(amino-thiopentachlorbenzol)
N,N'-Cyclodecylen-1,5-di(amino-thiopentachlorbenzol)
N,N'-Cycloundecylen-1,5-di(amino-thiopentachlorbenzol)
N,N'-Cyclododecylen-1,6-di(amino-thiopentachlorbenzol)

Die Verbindungen der Formeln 1 und 5 sind sowohl teilweise bekannt als auch teilweise neu. Sie lassen sich alle nach dem Verfahren gemäß J.I.Eitingon,Zh,Obshch.Khim. 34 (5) 1608 (1964) herstellen.

Die erfindungsgemäßen Vulkanisationssysteme weisen Vorteile auf hinsichtlich Reversionsbeständigkeit nach längerer Vulkanisationszeit und/oder hohen Vulkanisationstemperaturen (z.B. 45 Min. bei 180°C) hinsichtlich mechanischer Werte, wie Spannungswert, Zugfestigkeit, Bruchdehnung, Härte, Elastizität, Weiterreißfestigkeit, Zermürbungsbeständigkeit, Ermüdungsbeständigkeit, innerer Wärmebildung (heat build up), dynamischem Fließen und Abrieb.

Die Einzelkomponenten des Vulkanisationssystems können den Dienkautschuken bzw. Kautschuk-Mischungen vor dem Vulkanisieren entweder getrennt oder in Form eines Gemisches oder einer Kautschuk-Beschleuniger-Vormischung (vgl.: Ullmann's Encyklopädie der technischen Chemie, 3. Auflage, Verlag: Urban & Schwarzenberg, München-Berlin 1957, Band 9, Seite 364) zugesetzt werden.

Als Synthesekautschuk aus halogenfreien Dienen seien beispielsweise genannt:
Polyisopren, Polybutadien, Styrol-Butadien-Kautschuk, Nitrilkautschuk und deren Verschnitte.

Die Dienkautschuke können alle üblichen Zusätze, wie Füllstoffe, insbesondere Ruße, Mineralöle, Weichmacher, Klebrigmacher, Beschleunigeraktivatoren, insbesondere Stearinsäure, Wachse, Alterungsschutzmittel, Ozonschutzmittel, Treibmittel, Farbstoffe, Pigmente, enthalten.

Füllstoffe, wie die in der Kautschuk verarbeitenden Industrie verwendeten Ruß-Sorten, weiterhin Kieselsäure, insbesondere feinteilige, in der Gasphase gewonnene Kieselsäure sowie hydrophobische Kieselsäure und feinteilige Metalloxyde, einschließlich Mischoxyde und Oxydgemische, sind wertvolle Mischungsbestandteile.

Die Vulkanisation der Dienkautschuke wird im allgemeinen bei Temperaturen zwischen etwa 100°C und etwa 300°C, bevorzugt bei 140°C - 240°C, durchgeführt. Hierfür können alle in der Technik üblichen Vulkanisationsverfahren wie Pressenheizung, Heizung mit Heißdampf, Heißluft, Salzbad, Fließbett, Ultrahochfrequenz und Dampfrohr, verwendet werden.

Die Erfindung sei durch folgende Beispiele erläutert:

Verzeichnis der Abkürzungen und Testmethoden

| | | |
|---|---|---|
| MBT | = | 2-Mercaptobenzothiazol |
| MBTS | = | Dibenzothiazyldisulfid |
| ZMBT | = | Zinksalz des 2-Mercaptobenzothiazols |
| CBS | = | Benzothiazyl-2-cyclohexylsulfenamid |
| TBBS | = | Benzothiazyl-2-tert.-butylsulfenamid |
| MBSS | = | 2-(4-Morpholinyl-dithio-benzothiazol) |
| DTDM | = | Dimorpholyldisulfid |
| MBS | = | Benzothiazyl-2-morpholinsulfenamid |
| DCBS | = | Benzothiazyl-dicyclohexylsulfenamid |
| TMTD | = | Tetramethylthiuramdisulfid |
| TMTM | = | Tetramethylthiuram-monosulfid |
| ZDMC | = | Zink-N-dimethyldithiocarbamat |
| ZDEC | = | Zink-N-diethyldithiocarbamat |
| ZDBC | = | Zink-N-dibutyldithiocarbamat |
| ZEPC | = | Zink-N-ethylphenyldithiocarbamat |
| Z5MC | = | Zink-N-pentamethylendithiocarbamat |
| TMQ | = | polymerisiertes 2,2,4-Trimethyl-dihydrochinolin |
| IPPD | = | N-Phenyl-N'-isopropyl-p-phenylendiamin |

| | |
|---|---|
| Vulkameter | Bayer-Vulkameter, Aufheizung jeweils 1 min. Meßbereich 3/20 mV |
| $t_s(30)/130^\circ C$ (min)<br>$160^\circ C$ | Anvulkanisationszeit aus Vulkametermessung bei $130^\circ C$ bzw. $160^\circ C$, Zeit bis zum Anstieg der Schubmodulkurve um 30 mm über das Minimum bei $t_s$ (15) um 15 mm über das Minimum |

| | |
|---|---|
| Fe-Fa (mm) | Schubmodul (Endwert minus Anfangswert); bei ansteigenden Kurven Grenzwert nach 45 min Laufdauer bei der angegebenen Temperatur, z.B. (160°C) |
| $t_{90}$ (min) | Ausheizzeit, Zeit bis zum Erreichen von 90% des maximalen Schubmoduls (Bayer-Vulkameter) |
| Stufenheizung | 4 mm Klappen, Pressenheizung |
| $M_{300}$ (MPa) | Spannungswert bei 300 % Dehnung, DIN 53504 |
| F (MPa) | Zerreißfestigkeit, DIN 53504, Normring R 1 |
| D (%) | Bruchdehnung, DIN 53504, Normring R 1 |
| H (Shore A) | Härte Shore A, DIN 53504, Normring R 1 |
| E (%) | Rückprall-Elastizität, DIN 53512, 4 mm Klappe |
| Struktur nach Pohle (N) | Ringstruktur |
| Reversion (%) | aus Stufenheizung: $\frac{M_{300} \text{ nach } 45\text{ min}/180^{\circ}C}{M_{300}\text{-maximum bei } 150^{\circ}C} \times 100$ |
| T (°C) | Temperaturanstieg im Goodrich-Flexometer DIN 53533 Starttemperatur 100°C, Stat. Vorlast 10,0 $kp/cm^2$ Hub ± 5,71 mm, Frequenz: 24 Hz |
| Ermüdung | Nach der Kettenprüfmethode: Endloser gezahnter Profilriemen von 1,6 m Länge (9 aneinandergeheftete Einzelprüfkörper) läuft unter schwacher Spannung um 4 Führungsrollen von 50 mm Ø (scharfe Krümmung). 17600 Biegungen. Die Prüfung findet im Freien statt. |

Die Bewertung erfolgte nach einer vorgegebenen Musterskala:
0 bedeutet keine Rißbildung
1 bedeutet schwache Rißbildung

| | | |
|---|---|---|
| Kugelzermürbung | Kugeldurchmesser | 30 mm |
| | Anfangskraft | 147 N |
| | Zusatzkraft in Stufen von | 49 N |
| | max. Kraft | ca. 1000 N |
| | Anzahl der Umdrehungen | 2000 |
| | Drehzahl | 135/Min. |
| | Laufzeit/Kraftstufe | 14,8 Min. |

Beispiel 1

zeigt den Vergleich zwischen einem semi-efficient-System (1), das nur Schwefel und MBS enthält, einem System (2), das Zinkdibutyldithiophosphat als Zusatz enthält und einem erfindungsgemäßen System (3), das N-Dimethylamino-thiopentachlorbenzol enthält.
In einem Innenmischer wurde aus folgenden Bestandteilen eine Kautschukvormischung angefertigt:

| | | |
|---|---|---|
| Naturkautschuk | 80,o | phr |
| Polybutadien | 20,0 | " |
| Ruß N 330 (HAF) | 55,0 | " |
| aromatisches Mineralöl | 3,0 | " |
| Stearinsäure | 2,5 | " |
| mikrokristallines Ozonschutz-wachs | 1,0 | " |
| IPPD | 1,5 | " |
| TMQ | 1,0 | " |
| Zinkoxid | 5,0 | " |

Auf einem Laborwalzwerk werden folgende Bestandteile nachgemischt:

| | | | |
|---|---|---|---|
| System 1) | 1,425 | phr | Schwefel |
| | 1,20 | " | MBS |
| System 2) | 1,425 | phr | Schwefel |
| | 0,6o | " | MBS |
| | 1,20 | " | Zinkdibutyldithiophosphat |

System 3) 1,425 phr Schwefel
0,6o " MBS
1,20 " N-Dimethylamino-thio-penta-chlorbenzol

| | 1 | 2 | 3 |
|---|---|---|---|
| Reversionsbeständigkeit (%) nach 45 Min/180°C bez. auf $M_{300}$ | 53,5 | 72 | 79 |
| Anvulkanisationszeit $t_s$ (Min) bei 130°C | 18,2 | 10,7 | 20 |
| Ausvulkanisationszeit $t_{90}$ (Min) bei 150°C | 15,7 | 7,1 | 18,o |

System 3 gibt deutlich bessere Reversionsbeständigkeit (nach einer Übervulkanisation von 45 Min. bei 180°C) als das Zinkdibutyl-dithiophosphat enthaltende System 2, und ergibt eine wesentlich höhere Anvulkanisationsbeständigkeit bei 130°C als System 2.

Beispiel 2

Mit den folgenden Bestandteilen wurde im Innenmischer eine Kautschukvormischung hergestellt:

| | |
|---|---|
| Naturkautschuk (RSS No 1) | 100,0 phr |
| Ruß N 330 (HAF) | 45,0 " |
| Zinkoxid | 5,0 " |
| Stearinsäure | 3,0 " |
| aromat. Mineralöl | 2,5 " |
| naphthen. Mineralöl | 2,5 " |
| TMQ | 1,0 " |
| IPPD | 1,5 " |

Auf einem Laborwalzwerk wurden folgende Mischungen hergestellt:

| | | |
|---|---|---|
| Mischung 1) | Schwefel | 1,425 phr |
| | MBS | 1,20 " |
| Mischung 2) | Schwefel | 1,425 phr |
| | MBS | 0,6o " |
| | N-Di-methylamino-thiopentachlor-benzol | 1,20 phr |

In der folgenden Tabelle sind die durchgeführten Prüfungen und deren Ergebnisse zusammengestellt:

| | Mischung 1 | Mischung 2 |
|---|---|---|
| Vulkametermessung | | |
| Aufheizung: 1 Min. | | |
| Anvulkanisationszeit $t_s/130^\circ C$ (Min.) | 18,2 | 17,8 |
| Fließzeit $t_s/150^\circ C$ (Min.) | 4,8 | 5,8 |
| Ausheizzeit $t_{90}/150^\circ C$ (Min.) | 15,7 | 18,0 |
| Ausheizzeit $t_{90}/18o^\circ C$ (Min) | 2,9 | 2,5 |
| Schubmodul Fe-Fa/$150^\circ C$ (mm) | 120 | 163 |

Stufenheizung

F = Zugfestigkeit
D = Bruchdehnung
M = Spannungswert
H = Härte
E = Elastizität
Str = Struktur nach Pohle (Ringstruktur)

| | | F | D | M 100 | M 300 | H | E | Str |
|---|---|---|---|---|---|---|---|---|
| | 150°/20' | 21,8 | 560 | 1,6 | 8,6 | 60 | 50 | 460 |
| Mischung 1) | 25' | 22,5 | 580 | 1,7 | 8,3 | 60 | 49 | 375 |
| | 30' | 21,4 | 575 | 1,6 | 8,2 | 60 | 47 | 355 |
| | 45' | 21,0 | 560 | 1,5 | 7,9 | 59 | 47 | - |
| | 150°/20' | 23,7 | 505 | 2,4 | 12,2 | 64 | 51 | 420 |
| Mischung 2) | 25' | 22,5 | 485 | 2,4 | 11,9 | 64 | 51 | 403 |
| | 30' | 23,6 | 505 | 2,4 | 12,2 | 65 | 51 | 413 |
| | 45' | 23,4 | 490 | 2,4 | 12,3 | 64 | 51 | - |
| | 180°/10' | 13,4 | 580 | 1,1 | 5,6 | 54 | 45 | - |
| Mischung 1) | 20' | 14,5 | 560 | 1,1 | 4,9 | 52 | 44 | - |
| | 30' | 14,5 | 590 | 1,0 | 4,6 | 52 | 43 | - |
| | 45' | 13,3 | 570 | 1,0 | 4,6 | 52 | 44 | 77 |
| | 60' | 13,2 | 555 | 1,1 | 4,7 | 53 | 42 | 80 |
| | 180°/1o' | 21,5 | 505 | 2,0 | 10,2 | 61 | 49 | - |
| Mischung 2) | 20' | 18,8 | 475 | 1,9 | 9,8 | 61 | 48 | - |
| | 30' | 19,2 | 490 | 1,9 | 9,5 | 61 | 46 | - |
| | 45' | 16,4 | 470 | 2,0 | 9,7 | 60 | 46 | 315 |
| | 60' | 17,3 | 460 | 1,9 | 9,3 | 61 | 45 | 181 |

(Nach Heißluftalterung von 5 Tagen bei 100°C)

| | | F | D | $M_{100}$ | $M_{300}$ | H | E |
|---|---|---|---|---|---|---|---|
| | 150°/20' | 11,7 | 315 | 2,4 | 11,0 | 63 | 46 |
| Mischung 1) | 25' | 9,9 | 285 | 2,4 | 11,0 | 61 | 43 |
| | 30' | 10,3 | 300 | 2,4 | 10,5 | 62 | 42 |
| | 150°/20' | 13,0 | 310 | 2,8 | 10,5 | 66 | 47 |
| Mischung 2) | | 12,1 | 280 | 2,9 | 11,9 | 66 | 46 |
| | | 12,9 | 305 | 2,9 | 12,8 | 67 | 47 |

| | Mischung 1 | Mischung 2 |
|---|---|---|
| Kettenermüdung $5x10^6$ Biegungen (Heizstufe 150°C/25 Min. | 1 | 0 |
| DIN-Abrieb (Heizstufe 150°/ 20 Min) | 100 | 92 |
| Heat build up im Goodrich-Flexometer Heizstufe 150°C/25 Min. (°C) | 18 | 11 |
| Fließen (%) | -12 | -6 |
| Kugelzermürbung (Heizstufe 150°/30 Min) | | |
| zerstört nach Umdrehungen | 8400 | 12067 |
| | 350 N/175°C | 425 N/164°C |
| Reversionsbeständigkeit nach 45 Min/180°C (%) | 53,5 | 79 |

Das erfindungsgemäße Vulkanisationssystem 2 zeigt deutliche Vorteile vor dem Vergleichssystem 1 hinsichtlich Reversionsbeständigkeit (nach Übervulkanisation von 45 Min. bei 180°C), Strukturfestigkeit, Ermüdungsbeständigkeit, sowie hinsichtlich Ermüdungsbeständigkeit nach der "Kettenermüdungsprüfung". System 2 zeigt ferner niedrige innere Wärmebildung (heat build up) im Goodrich-Flexometer niedrigeres Fließen, längere Lebensdauer bei der Kugelzermürbungsprüfung sowie geringeren Abrieb.

## Beispiel 3

In einem Innenmischer wurde aus den in Beispiel 1 angegebenen Bestandteilen eine Kautschuk-Vormischung auf Basis Naturkautschuk/Polybutadien hergestellt. Auf einem Laborwalzwerk wurden nachgemischt:

| | | |
|---|---|---|
| Vergleichssystem A) | Schwefel | 1,425 phr |
| | MBS | 1,20 " |
| erfindungsgemäße Systeme 1-22) | Schwefel | 1,425 phr |
| | MBS | 0,60 " |
| | Beschleuniger variabel je | 1,20 " |

| | | Reversionsbeständigkeit nach 45 Min/180°C (%) |
|---|---|---|
| Vergleichssystem | A | 59,3 |
| System | 1 | 80 |
| | 2 | 74 |
| | 3 | 70,5 |
| | 4 | 80 |
| | 5 | 71 |
| | 6 | 74,5 |
| | 7 | 76,5 |
| | 8 | 73 |
| | 9 | 69 |
| | 10 | 70 |
| | 11 | 77 |
| | 12 | 79,5 |

| | | Reversionsbeständigkeit nach 45 Min/180°C (%) |
|---|---|---|
| System | 13 | 76 |
| | 14 | 75 |
| | 15 | 72 |
| | 16 | 81 |
| | 17 | 82 |
| | 18 | 78,5 |
| | 19 | 81 |
| | 20 | 63 |
| | 21 | 63 |
| | 22 | 78 |

Die Anvulkanisationszeit $t_s(15)/130^oC$ liegt über 17 min., die Anvulkanisationszeit $t_{90}/150^oC$ liegt zwischen 12 und 20 min.

Die in Beispiel 3 verwendeten Zusatzbeschleuniger, die der allgemeinen Formel I entsprechen, sind:

Lfd. No:

| | |
|---|---|
| 1 | N-Dimethylamino-thio-pentachlorbenzol |
| 2 | N-Diethylamino-thio-pentachlorbenzol |
| 3 | N-Di-n-propylamino-thio-pentachlorbenzol |
| 4 | N-Di-isopropylamino-thio-pentachlorbenzol |
| 5 | N-Di-n-butylamino-thio-pentachlorbenzol |
| 6 | N-Di-isobutylamino-thio-pentachlorbenzol |
| 7 | N-Pyrrolidino-thio-pentachlorbenzol |
| 8 | N-Piperdino-thio-pentachlorbenzol |
| 9 | N-Perhydroazepino-thio-pentachlorbenzol |
| 10 | N-Morpholino-thio-pentachlorbenzol |
| 11 | N-Methylamino-thio-pentachlorbenzol |
| 12 | N-tert.-Butylamino-thio-pentachlorbenzol |
| 13 | N-n-Butylamino-thio-pentachlorbenzol |
| 14 | N-Cyclohexylamino-thio-pentachlorbenzol |
| 15 | N-Phenylamino-thio-pentachlorbenzol |
| 16 | N,N'-Piperazino-bis-(thio-pentachlorbenzol) |
| 17 | N,N'-Ethylendiamino-bis-(thio-pentachlorbenzol) |
| 18 | N-Butylamino-bis-(thio-pentachlorbenzol) |
| 19 | N-Cyclohexylamino-bis-(thio-pentachlorbenzol) |
| 20 | N-(2,6-Diethylphenyl)-thio-pentachlorbenzol |
| 21 | N,N'-Dicyclohexyl-thio-4-chlorbenzol |
| 22 | N,N-Bis-(thio-2,4,5-trichlorphenyl)-amin |

Beispiel 4

In einem Innenmischer wurde aus den in Beispiel 2 angegebenen Bestandteilen eine Kautschuk-Mischung auf Basis Naturkautschuk hergestellt. Auf einem Laborwalzwerk wurden nachgemischt:

| | | |
|---|---|---|
| Vergleixhssystem B) | Schwefel | 1,425 phr |
| | MBS | 1,20 " |
| erfindungsgemäße Systeme | Schwefel | 1,425 phr |
| | MBS | 1,40 " |
| | Beschleuniger | |
| | variabel je | 0,005553 Mol |

| Meßergebnisse | | Reversionsbeständigkeit nach 45'/180°C (%) | Anvulkanisationszeit $t_s$(15)/130°C (Min) |
|---|---|---|---|
| Vergleichssystem B) | | 59,3 | 18 |
| System | 23 | 91 | 18 |
| " | 24 | 76 | 21,5 |
| " | 25 | 79 | 18 |
| " | 26 | 82 | 21 |
| " | 27 | 95 | 20 |
| " | 28 | 79 | 18 |

Die im Beispiel 4 verwendeten Zusatzbeschleuniger sind:

| No. | |
|---|---|
| 23 | N,N'-Phenylen-1,2-di(amino-thiopentachlorbenzol) |
| 24 | N,N'-Phenylen-1,3-di(amino-thiopentachlorbenzol) |
| 25 | N,N'-Naphthylen-1,5-di(amino-thiopentachlorbenzol) |
| 26 | N,N'-Cyclohexylen-1,2-di(amino-thiopentachlorbenzol) |
| 27 | N,N'-Cyclohexylen-1,4-di(amino-thiopentachlorbenzol) |
| 28 | N,N'-Xylylen-1,3-di(amino-thiopentachlorbenzol) |

Patentansprüche

1) Vulkanisationssystem bestehend aus

a) 20 bis 50 Gew.-Teilen Schwefel oder 20 bis 50 Gew.-Teilen, eines Schwefelspenders

b) 20 bis 50 Gew.-Teilen eines Beschleunigers der Mercapto- bzw. Sulfenamidgruppe

c) 0 bis 10 Gew.-Teilen eines konventionellen Zusatzbeschleunigers und

d) 20 bis 50 Gew.-Teilen einer Verbindung der allgemeinen Formel 1

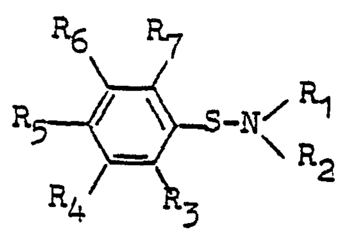

(1)

in der

$R_1$ Wasserstoff, einen $C_1$-$C_{10}$-Alkyl- oder Alkenylrest, einen $C_5$-$C_7$-Cycloalkyl- oder Cycloalkenylrest, eine $C_6$-$C_{10}$-Arylgruppe, die gegebenenfalls mit $C_1$-$C_4$-Alkylresten ein- oder mehrfach, bevorzugt 1 - 2-fach substituiert ist,

$R_2$ Wasserstoff, einen $C_1$-$C_{10}$-Alkyl- oder Alkenylrest, einen $C_5$-$C_7$-Cycloalkyl- oder Cycloalkenylrest, eine $C_6$-$C_{10}$-Arylgruppe, die gegebenenfalls mit $C_1$-$C_4$-Alkylresten ein- oder mehrfach, bevorzugt 1 - 2-fach substituiert ist, einen Rest der allgemeinen Formeln 2 oder 3

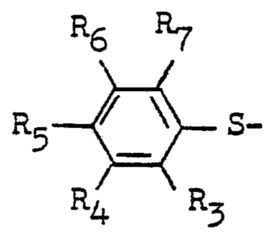

(2)

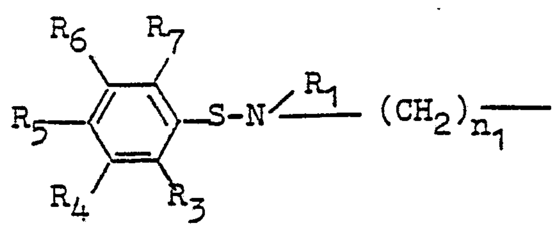

(3),

in welcher

$n_1$ Zahlen von 2 bis 10, darstellen,

$R_1$ und $R_2$ gemeinsam einen 4- bis 10-gliedrigen, carbocyclischen Ring bilden, der gegebenenfalls ein Heteroatom wie N, O, S im Ring enthält,

eine Verbindung der allgemeinen Formel 4

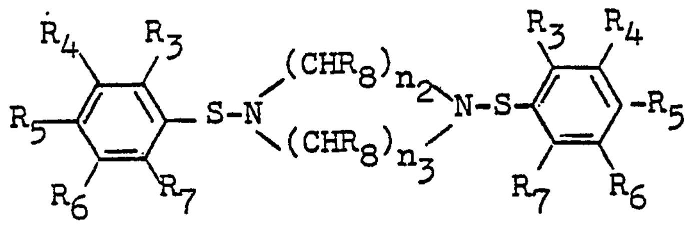 (4),

in welcher

$n_2$ und $n_3$ gleich oder verschieden Zahlen von 2 bis 10 darstellen und

$R_8$ Wasserstoff oder Methyl bedeuten

und in den Formeln 1 bis 5

$R_3$ bis $R_7$ gleich oder verschieden Wasserstoff, Halogen, Nitro, Cyano, $-CF_3$, $-C\ Cl_3$, einen Alkoxycarbonylrest mit $C_1$-$C_4$-Alkyl im Alkoxyrest, einen $C_1$-$C_4$-Alkylrest, wobei jedoch nicht alle Reste $R_3$-$R_7$ gleichzeitig Wasserstoff darstellen,

oder eine Verbindung der Formel (5)

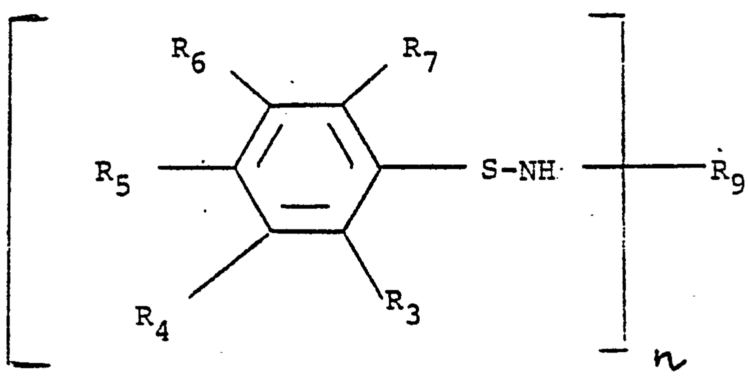 (5)

in der

n die Zahlen 2 oder 3 und

$R_9$ $C_4$-$C_{12}$ Cycloalkyl, $C_6$-$C_{10}$ Aryl, Di-$C_4$-$C_{12}$ Cycloalkyl-$C_1$-$C_4$-alkyl, Tri-$C_4$-$C_{12}$-cycloalkyl-$C_1$-$C_4$ alkyl, Di-$C_6$-$C_{10}$-aryl-$C_1$-$C_4$-alkyl und Tri-$C_6$-$C_{10}$ aryl-$C_1$-$C_4$alkyl

bedeuten, wobei die Summe der Komponenten a - d) 100 beträgt.

2) Vulkanisationssystem gemäß Anspruch 1 bestehend aus
a) 40 bis 50 Gew.-Tln. Schwefel oder 40 bis 50 Gew.-Tln. eines Schwefelspenders,
b) 20 bis 30 Gew.-Tln. eines Beschleunigers der Mercapto- bzw. Sulfenamidgruppe,
c) 0 bis 5 Gew.-Tln. eines konventionellen Zusatzbeschleunigers und
d) 20 bis 30 Gew.-Tln. einer Verbindung der allgemeinen Formeln 1 bis 5.

3) Vulkanisierbare Mischung bestehend aus natürlichem und/oder synthetischen Kautschuk aus halogenfreien Dienen, einem Vulkanisationssystem gemäß Ansprüchen 1 und 2 und gegebenenfalls üblichen Zusätzen.

4) Verfahren zur Vulkanisation von Natur- und/oder Synthesekautschuk aus halogenfreien Dienen in Gegenwart von Schwefel und/oder Schwefelspendern, Vulkanisationsbeschleunigern, und gegebenenfalls üblichen Zusätzen, dadurch gekennzeichnet, daß man

a) 0,1 - 5 phr Schwefel bzw. 0,2 - 10 phr eines Schwefelspenders,
b) 0,1 - 5 phr eines Beschleunigers der Mercapto- bzw. Sulfenamidgruppe,
c) 0 - 5 phr eines konventionellen Zusatzbeschleunigers und
d) 0,1 - 5 phr einer Verbindung der allgemeinen Formeln 1 bis 5 gemäß Anspruch 1

getrennt oder gleichzeitig dem Kautschuk zugibt und anschließend in üblicher Weise vulkanisiert.

5) Verfahren gemäß Anspruch 4, dadurch gekennzeichnet, daß man
a) 1 - 2 phr Schwefel bzw. 2 - 4 phr eines Schwefelspenders,
b) 0,4 - 2 phr eines Beschleunigers der Mercapto- bzw. Sulfenamidgruppe,
c) 0 - 1 phr eines konventionellen Zusatzbeschleunigers und
d) 0,4 - 2,5 phr einer Verbindung der allgemeinen Formeln 1 - 5 gemäß Anspruch 1

dem Kautschuk getrennt oder gleichzeitig zugibt und anschließend in üblicher Weise vulkanisiert.

6) Verfahren gemäß Ansprüchen 4 und 5, dadurch gekennzeichnet, daß man die Vulkanisation bei Temperaturen von 100 - 300°C durchführt.

0018620

Europäisches Patentamt

# EUROPÄISCHER RECHERCHENBERICHT

Nummer der Anmeldung
EP 80 10 2287

| EINSCHLÄGIGE DOKUMENTE | | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| X | US - A - 3 047 546 (F. LOBER et al)<br>* Anspruch 9; Spalte 4, Zeile 63 - Spalte 5, Zeile 9 *<br>-- | 1-6 | C 08 L 21/00<br>C 08 K 5/44 |
| X | US - A - 2 460 393 (P.T. PAUL)<br>* Anspruch 1 *<br>-- | 1-6 | |
| X | US - A - 2 382 813 (P.T. PAUL)<br>* Anspruch 1 *<br>-- | 1-6 | RECHERCHIERTE SACHGEBIETE (Int. Cl. ³) |
| X | US - A - 3 513 139 (A.Y. CORAN et al.)<br>* Anspruch 1; Spalte 3, Zeile 45 *<br>-- | 1-6 | C 08 L 7/00-21/00<br>C 08 K 5/44 |
| X | GB - A - 1 345 318 (RHONE POULENC)<br>* Anspruch 11; Seite 2, Zeile 120 - Seite 3, Zeile 7 *<br>---- | 1-6 | |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 04-08-1980 | V. HUMBEECK |